# EUROPÄISCHE PATENTSCHRIFT

(11) **EP 1 634 632 B1**
(45) Veröffentlichungstag und Bekanntmachung des Hinweises auf die Patenterteilung: **21.06.2017**
(21) Anmeldenummer: 05017422.6
(22) Anmeldetag: 10.08.2005
(51) Int. Cl.: B01D 35/027

(54) **FLUIDFILTER**
FLUID FILTER
FILTRE DE FLUIDE

(30) Priorität: 10.08.2004 DE 102004038831
(43) Veröffentlichungstag der Anmeldung: 15.03.2006
(73) Patentinhaber: IBS Filtran Kunststoff-/Metallerzeugnisse GmbH, 51597 Morsbach (DE)
(72) Erfinder: Beer, Markus, 51597 Morsbach (DE); Stausberg, Wolfgang, 51597 Morsbach (DE); Jacob, Michel, 51597 Morsbach (DE)
(74) Vertreter: Kierdorf Ritschel Richly

(56) Entgegenhaltungen:
- EP-A- 1 275 427
- DE-U1- 20 006 981
- US-A- 4 402 827

## Beschreibung

Die Erfindung betrifft ein Fluidfilter mit einem Fluidfiltermedium nach Oberbegriff von Anspruch 1.

Gemäß dem Stand der Technik ist bekannt, siehe Patentschrift US 4,402,827, dass ein Fluidfilter, wie z.B. ein Saugölfilter für Automatikgetriebe, ein Feinfiltermedium und ein Grobfiltermedium aufweist. Dabei sind das Feinfiltermedium und das Grobfiltermedium in Parallelschaltung zueinander geschaltet. Das Grobfiltermedium weist einen im Vergleich zum Feinfiltermedium relativ niedrigen Fließwiderstand für ein das Fluidfiltermedium durchdringendes Fluid auf. Bei niedrigen Temperaturen bzw. relativ hoher Viskosität des Fluids wird durch die Verwendung eines zum Feinfiltermedium parallel geschalteten Grobfiltermediums erreicht, dass der Gesamtfließwiderstand des Fluidfilters so niedrig ist, dass eine Mindestfluidversorgung erzielt werden kann. Ohne Einsatz des Grobfilters wird bei niedrigen Temperaturen der Druckabfall am Fluidfilter zu groß, so dass ein Fluidvolumenstrom unterhalb eines Grenzwertes absinkt.

Aufgrund von zunehmenden Anforderungen z.B. bei Automatikgetrieben und bei Motoren für Kraftfahrzeuge im Hinblick auf Wirkungsgrad, Leistungsfähigkeit und Schaltkomfort ist es erforderlich, dass ein Fluidfiltermedium bei niedrigen Temperaturen nicht nur einen geringen Druckabfall des Ölvolumenstroms erzeugt, sondern auch eine hohe Filterwirkung bzw. Filtrationsleistung bewirkt. Durch die Erfindung wird die Aufgabe gelöst, ein Fluidfiltermedium zu schaffen, welches bei niedrigen Temperaturen einen niedrigen Fließwiderstand bei gleichzeitig hoher Filtrationsleistung bereitstellt.

Aus dem Dokument US 4, 402, 827 A ist ein einfach gefaltetes Filterelement bekannt, welches doppellagig in einer Wanne, bestehend aus einer Basis und einem Deckel, angeordnet ist. Das Filterelement besteht aus zwei unterschiedlichen Filtern, nämlich einem großflächigen doppellagigen Feinfilter, welcher die Einlassöffnung umfasst, sowie einem zweiten Filter, welcher ein Grobfilter ist, der in der unteren Lage des gefalteten Filterelements angeordnet ist und sich unter der Einlassöffnung befindet.

Ein mehrstufiger Filter ist auch aus der EP 1 275427 A2 bekannt. Weiterhin ist aus der DE 20 006 981 U1 eine Filtervorrichtung mit mindestens zwei parallel geschalteten Filtern unterschiedlicher Feinheit bekannt, wobei mindestens einem gröberen Filter ein Ventil zugeordnet ist, das öffnet, wenn die Durchströmung eines feineren Filters einen definierten Betrag unterschreitet. Bei der bekannten Filtervorrichtung sind die Bereiche verschiedener Durchlässigkeit nebeneinander bzw. aneinander angrenzend angeordnet, wobei die Filter bevorzugt als Teilabschnitte eines hohlzylindrischen Körpers ausgebildet sind.

Der Erfindung liegt die Aufgabe zugrunde, ein Filtermedium zur Verfügung zu stellen, welches auch bei geringeren Betriebstemperaturen sowohl einen niedrigeren Fließwiderstand als auch eine gleichzeitig hohe Filtrationsleistung bereitstellt.

Die Aufgabe wird gelöst durch die Merkmale des Anspruchs 1, vorteilhafte Ausgestaltungen der Erfindung ergeben sich aus den Unteransprüchen.

Das erfindungsgemäße Fluidfiltermedium, welches von einem Fluid durchströmbar ist, weist auf: ein Feinfiltermedium und ein erstes Grobfiltermedium, welches zum Feinfiltermedium in Parallelschaltung angeordnet ist, wobei das Fluidfiltermedium zusätzlich ein Feinstfiltermedium aufweist, welches zum Feinfiltermedium und zum Grobfiltermedium in Parallelschaltung angeordnet ist, so dass sich ein Fluidstrom des Fluids durch das Feinfiltermedium, das Grobfiltermedium und das Feinstfiltermedium aufteilt. Dies ist vorteilhaft, da somit bei niedrigen Temperaturen aufgrund des Grobfiltermediums ein akzeptabler Druckabfall am Fluidfiltermedium erreicht wird, während gleichzeitig aufgrund des Feinfiltermediums und Feinstfiltermediums eine ausreichende Filtrationsleistung erzielt wird. Durch den Einsatz des Feinfiltermediums, Grobfiltermediums und Feinstfiltermediums als multiples Fluidfiltermedium ist es zudem möglich, mit einem Saugölfilter eine hohe Filtrationsleistung zu erreichen, so dass ein zusätzlicher Druckölfilter, in welchem üblicherweise ein sehr fein filterndes Filtermedium zum Einsatz kommt, für ein gutes Filtrationsergebnis nicht mehr verwendet werden muss. Um ein sehr fein gefiltertes Hydrauliköl zu erzielen, genügt es, statt Saugölfilter und Druckölfilter nur noch einen Saugölfilter zu verwenden, welcher ein erfindungsgemäßes Fluidfiltermedium aufweist. Ein Saugölfilter mit einem multiplen Fluidfiltermedium gemäß der Erfindung ermöglicht es, dass ein vorhandener Druckölfilter vollständig ersetzt wird oder zumindest zu einer signifikanten Lebensdauerverlängerung des Saugölfilters führt, wodurch ein Wartungsintervall für den Saugölfilter verlängert wird.

Gemäß der Erfindung ist bei normalen und hohen Betriebstemperaturen des Fluids in einem Fluidfilter, in welchem das Fluidfiltermedium vorgesehen ist, das Grobfiltermedium außerhalb eines Hauptdurchströmungsgebietes des Fluidfilters angeordnet und das Feinstfiltermedium innerhalb des Hauptdurchströmungsgebietes des Fluidfilters angeordnet. Dies ist vorteilhaft, da somit bei normalen und hohen Betriebstemperaturen ein möglichst hoher Anteil des niedrigviskosen Öls durch das Feinstfiltermedium gelenkt wird und somit eine hohe Filtrationsleistung bei niedrigem Fließwiderstand erzielt wird. Bei niedrigen Temperaturen hingegen wird das Feinstfiltermedium kaum durchströmt, wobei das hochviskose Öl auf ein Gebiet außerhalb des bei normalen und hohen Temperaturen vorliegenden Hauptdurchströmungsgebietes ausweicht, um durch das Grobfiltermedium zu passieren.

Nach der Erfindung ist das Grobfiltermedium in das Feinfiltermedium eingearbeitet. Dies ist vorteilhaft, da das Feinfiltermedium, welches ein Standardfiltermedium ist, zum Beispiel mit einer Aussparung versehen werden kann, in welche sich das Grobfiltermedium einarbeiten lässt.

Nach der Erfindung ist das Feinstfiltermedium in das Feinfiltermedium eingearbeitet. Dies ist vorteilhaft, da somit in ein Feinfiltermedium, welches als Trägermaterial dienen kann, ein Feinstfiltermedium eingebracht werden kann, ohne dass für das Feinstfiltermedium zum Beispiel ein zusätzliches Gehäuse erforderlich wäre.

Nach einer weiteren Ausgestaltung der Erfindung ist das Fluidfiltermedium mit mindestens einem Steuerelement versehen, mit welchem das Fluid durch das Grobfiltermedium und/oder das Feinfiltermedium und/oder das Feinstfiltermedium steuerbar ist. Dies ist vorteilhaft, da es mit der Steuerung eines Steuerelementes möglich ist, z.B. bei tiefen Temperaturen im Wesentlichen nur das Grobfiltermedium durchströmen zu lassen, während bei höheren Temperaturen im Wesentlichen das Feinfiltermedium bzw. das Feinstfiltermedium durchströmt wird, wobei das Grobfiltermedium nicht durchströmt wird. Durch die Steuerung des Steuerelementes wird erreicht, dass der Druckabfall bzw. der Fließwiderstand so gering wie möglich gehalten wird. Vorrangig wird die Steuerung des Steuerelementes wie zum Beispiel eines Ventils oder eines Schiebers hinsichtlich einer hohen Filtrationsleistung des Fluidfiltermediums ausgelegt. In diesem Fall ist es erforderlich, dass bei einem niedrigen Fluiddruck bzw. einer relativ hohen Fluidtemperatur der Fluidstrom durch das Grobfiltermedium reduziert wird.

Mögliche SteuerGrößen für die Steuerung des Steuerelementes sind zum Beispiel der Fluiddruck oder die Fluidtemperatur.

Nach einer weiteren Ausführungsform der Erfindung weist das Fluidfiltermedium ein zusätzliches Grobfiltermedium auf, welches zu dem Feinfiltermedium, dem ersten Grobfiltermedium und dem Feinstfiltermedium in Parallelschaltung angeordnet ist. Dies ist vorteilhaft, da z.B. in Bereichen des zum Fluidfiltermedium zugehörigen Fluidfilters, in welchen sich Luftblasen ansammeln, durch Einsatz eines Grobfiltermediums eine höhere Strömungsgeschwindigkeit durch diese Bereiche erzeugt werden kann. Dadurch lässt sich die Konzentration an Luftblasen im Fluidfilter verringern und eine homogenere Durchströmung des Fluidfilters erreichen. Außerdem wird der Fließwiderstand reduziert, da auf Bereiche, welche eine Feinfilterung oder eine Feinstfilterung nicht erfordern, verzichtet wird.

Nach einer weiteren Ausführungsform der Erfindung lässt das Feinstfiltermedium Partikel mit einer Größe von kleiner 5 m durch. Dies ist vorteilhaft, da sich somit die Filtrationsleistung eines Druckölfilters erreichen lässt.

Gemäß einer weiteren Ausführungsform der Erfindung lässt das Feinfiltermedium Partikel mit einer Größe von kleiner 50 m durch. Dies ist vorteilhaft, da als Feinfiltermedium somit ein Standardfiltermedium verwendet werden kann.

Gemäß einer weiteren Ausführungsform der Erfindung ist das Fluidfiltermedium als einlagiges Fluidfiltermedium ausgebildet. Dies ist vorteilhaft, da bei einem Austauschvorgang eines derartigen Fluidfiltermediums nur relativ wenige Aspekte zu beachten sind und der Vorgang daher mit relativ wenig Komplikationen durchführbar ist.

Gemäß einer weiteren Ausführungsform ist das Fluidfilter für ein Automatikgetriebe eines Kraftfahrzeuges einsetzbar. Dies ist vorteilhaft, da sich somit ein hoher Wirkungsgrad, eine hohe Leistungsfähigkeit und ein hoher Schaltkomfort bei einem Automatikgetriebe erreichen lässt.

Gemäß einer weiteren Ausführungsform ist das Fluidfilter in einem Motor eines Kraftfahrzeuges einsetzbar. Dies ist vorteilhaft, da bei einem Kraftfahrzeugmotor Partikel wie zum Beispiel Verbrennungsrückstände, Metallabrieb, Staub u.ä. im Schmierkreislauf zu Schäden oder höherem Verschleiß führen und sich derartige Folgen bei Einsatz eines erfindungsgemäßen Fluidfiltermediums deutlich verringern lassen.

Gemäß einer weiteren Ausführungsform der Erfindung ist das Fluidfilter in einem Saugfilter und/oder Druckfilter einsetzbar. Dies ist vorteilhaft, da durch die Parallelschaltung eines Feinfiltermediums, eines Grobfiltermediums und eines Feinstfiltermediums eine hohe Filtrationsleistung bei gleichzeitig niedrigem Druckabfall des Fluidfilters erreichbar ist und somit ein Druckölfilter durch einen Saugölfilter ersetzt werden kann. Außerdem ist sich das erfindungsgemäße Fluidfiltermedium auch in einem Druckölfilter einsetzbar.

Im Folgenden wird die Erfindung anhand bevorzugter Ausführungsformen mit Bezugnahme auf die Zeichnung erläutert. In der Zeichnung zeigen:
- Figur 1: eine Draufsicht einer bevorzugten Ausführungsform der Erfindung,
- Figur 2: eine Draufsicht einer weiteren Ausführungsform der Erfindung,
- Figur 3: eine schematische Darstellung des Volumenstroms für ein Fluidfiltermedium gemäß der Erfindung. In den Figuren sind für gleiche Teile gleiche Bezugszeichen verwendet.

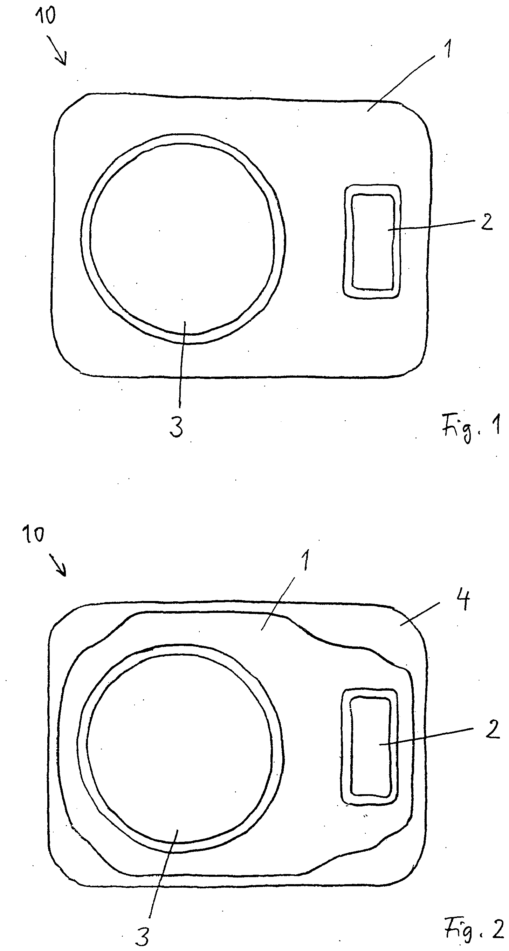

Figur 1 zeigt eine Ausführungsform eines erfindungsgemäßen Fluidfiltermediums 10, welches ein Feinfiltermedium 1, ein Grobfiltermedium 2 und ein Feinstfiltermedium 3 aufweist. Als Feinfiltermedium wird ein Polyester-Nadelvlies eingesetzt, welches Partikel in einem Bereich von 5 m bis 50 m zurückhält. Der Feinfilter 1 ist das Trägermaterial, in welchem das Grobfiltermedium 2 und das Feinstfiltermedium 3 eingebracht sind. An den Stellen, an denen das Grobfiltermedium 2 und das Feinstfiltermedium 3 vorgesehen sind, ist das Feinfiltermedium 1 ausgespart, so dass keine Hintereinanderschaltung eines Feinfiltermediums 1 mit einem Grobfiltermedium 2 oder einem Feinstfiltermedium 3 vorliegt. Ein Hydrauliköl passiert die genannten Filtermedien 1, 2 und 3 in Parallelschaltung, so dass sich ein Fluidstrom durch das Feinfiltermedium, das Grobfiltermedium und das Feinstfiltermedium aufteilt.

Die Größe der Flächenverhältnisse zwischen den einzelnen Filtermedien ist so zu gestalten, dass zum einen der Druckabfall am gesamten Fluidfiltermedium 10 bei niedrigen Temperaturen noch unterhalb eines Grenzwertes liegt. Zum anderen ist die Flächenaufteilung zwischen den einzelnen Fluidfiltermedien 1, 2, 3 so zu wählen, dass die Schmutzaufnahmekapazität der Fluidfiltermedien 1, 2 und 3 für einen geforderten Zeitraum (z.B. ein Wartungsintervall) ausreichend hoch ist. Zusätzlich ist bei der Flächenaufteilung der einzelnen Fluidfiltermedien 1, 2 und 3 zu beachten, dass die Filtrationsleistung des gesamten Filtermediums einen Mindestwert erreicht, so dass das Hydrauliköl durch den Filter genügend gereinigt wird. Weitere Parameter im Hinblick auf die Flächenaufteilung der einzelnen Filtermedien 1, 2, 3 sind der verfügbare Bauraum und die anfallende Verschmutzung im Hydraulikkreislauf. Somit sind die einzelnen Parameter je nach Getriebeapplikation unterschiedlich zu gewichten. Vereinfacht lässt sich jedoch feststellen, dass zwei Kriterien von besonderer Bedeutung sind: Zum einen soll das Grobfiltermedium einen Flächenbereich einnehmen, welcher nur eine solche Größe aufweist, dass bei tiefen Temperaturen ein maximaler Druckabfall am gesamten Fluidfiltermedium 10 nicht überschritten wird. Zum anderen müssen das Feinfiltermedium 1 und das Feinstfiltermedium 3 einen so großen Anteil an der Oberfläche des gesamten Filtermediums einnehmen, dass eine genügende Filtrationsleistung und Schmutzaufnahme erzielt wird.

Die Position der einzelnen Filtermedien 1, 2, 3 auf der verfügbaren Fläche im Fluidfilter kann beliebig gewählt sein. Es ist jedoch vorteilhaft, dass bei normalen bis hohen Temperaturen das Grobfiltermedium 2 in einem Bereich angeordnet ist, welcher außerhalb des Hauptdurchströmungsgebietes des Filters liegt. Bei normalen bis hohen Temperaturen ist es damit möglich, dass das niedrigviskose Öl den direkten Weg zwischen Filtereinlass und Filterauslass vornimmt, wobei das Grobfiltermedium kaum durchströmt wird. Bei tiefen Temperaturen stellen das Feinfiltermedium 1 und das Feinstfiltermedium 3 hingegen einen so hohen Fließwiderstand dar, dass sich die Hauptströmungsrichtung zum Grobfiltermedium 2 hin verlagert und ein grosser Anteil des Volumenstroms das Grobfiltermedium 2 passiert. Die Flächenformen des Grobfiltermediums 2 und des Feinstfiltermediums 3 sind nicht auf die in Figur 1 dargestellte Kreisform begrenzt, sondern können beliebig gestaltet sein. Von Bedeutung sind in diesem Zusammenhang vorrangig die oben erwähnten Kriterien wie Druckabfall, Schmutzaufnahmekapazität und Filtrationsleistung des gesamten Fluidfiltermediums 10.

Figur 2 zeigt eine weitere Ausführungsform des erfindungsgemäßen Fluidfiltermediums, wobei ein zusätzliches Grobfiltermedium 4 vorgesehen ist. Das zusätzliche Grobfiltermedium 4 ist vorzugsweise im Bereich von sogenannten Totzonen, welche oftmals am Rand des Filtergehäuses vorliegen, angeordnet. Das Grobfiltermedium 4 hat die Wirkung, dass sich in den Randzonen eine höhere Strömungsgeschwindigkeit als bei Verwendung eines Feinfiltermediums oder Feinstfiltermediums einstellt. Damit ist es möglich, die Bildung von Luftblasen in den Randzonen des Fluidfilters zu einem großen Anteil zu vermeiden. Die aufgrund der Bauform eines Fluidfiltergehäuses vorliegende inhomogene Durchströmung bei einem einphasigen Fluidfiltermedium kann durch diese Massnahme so verbessert werden, dass sich eine homogenere Durchströmung bildet. Der Einbau eines zusätzlichen Grobfiltermediums 4 verschlechtert die Filtrationsleistung des Fluidfiltermediums 10 nur gering, da der zusätzliche Grobfilter 4 vorzugsweise in den Bereichen angeordnet ist, in denen beim Einsatz eines Feinfiltermediums nur eine geringe oder sehr geringe Durchströmung erzielt und somit auch nur wenig gefiltert wird.

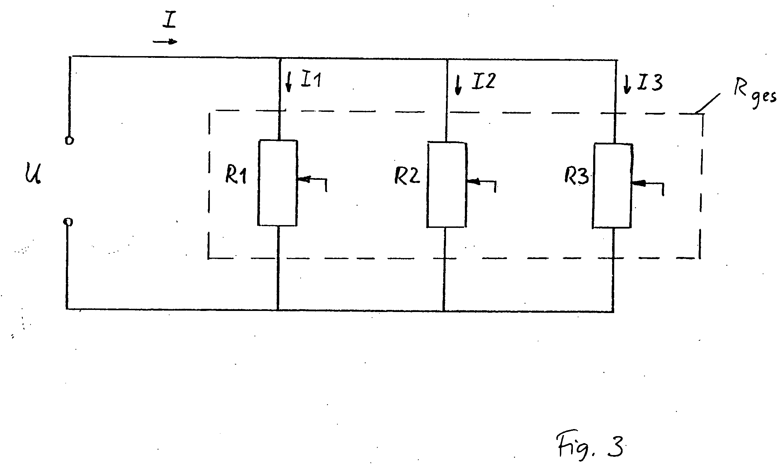

Die Schaltung des erfindungsgemäßen Fluidfiltermediums mit einem Feinfiltermedium 1, einem Grobfiltermedium 2 und einem Feinstfiltermedium 3 ist schematisch in Figur 3 dargestellt. Figur 3 zeigt ein elektrisches Widerstandsnetzwerk mit Widerständen R1, R2 und R3, durch welche ein Strom I fließt, welcher von einer Spannungsquelle U getrieben wird. Die Spannungsquelle U repräsentiert in diesem Fall eines Fluidfilters den erzeugten Unterdruck der Pumpe, wobei die Pumpe bewirkt, dass ein Fluidvolumenstrom durch ein Feinfiltermedium 1, ein Grobfiltermedium 2 und ein Feinstfiltermedium 3 gelenkt wird. Die Filtermedien 1, 2 und 3 besitzen jeweils einen zugehörigen Fließwiderstand R1, R2 und R3. Der Ölvolumenstrom V teilt sich bei den parallel geschalteten Widerständen R1, R2 und R3 je nach deren Größe auf. Können alle Filtermedien gleichberechtigt durchströmt werden, teilt sich der Volumenstrom derart auf, dass der Hauptstrom bzw. der grösste Anteil des Ölvolumenstroms über den kleinsten Widerstand, in diesem Fall der zum Grobfiltermedium zugehörige Widerstand R2, fließt. Der kleinste Ölvolumenstrom bzw. Nebenstrom fließt über den höchsten Widerstand, welcher in diesem Fall den höchsten Fließwiderstand des Filtermediums 10 darstellt. Dies wird durch den Widerstand R3 bzw. das Feinstfiltermedium 3 repräsentiert. Der Gesamtwiderstand ist derart zu wählen, dass bei einer angelegten Spannung, welche von der Pumpe repräsentiert wird, ein Mindeststrom bzw. ein Mindestölvolumenstrom bei niedrigen Betriebstemperaturen sichergestellt ist. Im Schaltbild in Figur 3 ist die zunehmende Verschmutzung der Filter bzw. die nachlassende Filterreinigungskapazität und der während der Betriebsdauer sich somit ändernde Fließwiderstand derart dargestellt, dass variable Widerstände (erkennbar am seitlich angreifenden Pfeil) vorgesehen sind.

In der folgenden Tabelle sind jeweils Begriffe des elektrischen Schaltkreises gemäß Figur 3 den Begriffen gegenübergestellt, welche zu dem erfindungsgemäßen Fluidfiltermedium korrespondieren:

| | |
|---|---|
| Elektrischer Schaltkreis | Fluidfiltermedium 10 |
| Elektrische Spannung ∪ | Unterdruck *ρ* der Saugpumpe |
| Elektrischer Strom *I* | Ölvolumenstrom V |
| Elektrischer Widerstand *R1* | Fließwiderstand des Feinfiltermediums 1 |
| Elektrischer Widerstand *R2* | Fließwiderstand des Grobfiltermediums 2 |
| Elektrischer Widerstand *R3* | Fließwiderstand des Feinstfiltermediums 3 |
| Elektrischer Gesamtwiderstand *Rges* | Fließwiderstand des Fluidfiltermediums 10 |
| Elektrischer Strom *I1* | Ölvolumenstrom durch Feinfiltermedium 1 |
| Elektrischer Strom *I2* | Ölvolumenstrom durch Grobfiltermedium 2 |
| Elektrischer Strom *I3* | Ölvolumenstrom durch Feinstfiltermedium 3 |

Da der Ölvolumenstrom mehrfach die Filtermedien 1, 2 und 3 passiert, somit das gesamte Ölvolumen statistisch betrachtet mindestens einmal durch das Feinstfiltermedium 3 geschickt wird, lässt sich bei einem Saugölfilter mit derartigen multiplen Filtermedien 1, 2, 3 eine höhere Reinigung des verschmutzten Öls erreichen, als wenn nur ein Feinfiltermedium 1 und ein Grobfiltermedium 2 zum Einsatz käme. Somit lassen sich Reinheitsklassen des Filteröls erzielen, welche bisher beim Stand der Technik nur mittels eines Druckölfilters realisierbar sind.

## Patentansprüche

1. Fluidfilter mit einem Fluidfiltermedium (10), welches von einem Fluid durchströmbar ist, wobei das Fluidfiltermedium (10) aufweist:
- ein Feinfiltermedium (1),
- ein erstes Grobfiltermedium (2), welches parallel zum Feinfiltermedium (1) vom Fluid durchströmbar angeordnet ist, wobei das Grobfiltermedium (2) in das Feinfiltermedium (1) eingearbeitet ist und bei normalen und hohen Betriebstemperaturen des Fluids in dem Fluidfilter, das Grobfiltermedium (2) in einem Bereich angeordnet ist, welcher ausserhalb eines Hauptdurchströmungsgebietes des Fluidfilters liegt, wobei das Fluidfiltermedium (10) zusätzlich ein Feinstfiltermedium (3) aufweist, welches parallel zum Feinfiltermedium (1) und zum Grobfiltermedium (2) vom Fluid durchströmbar angeordnet ist, so dass sich ein Fluidstrom des Fluids durch das Feinfiltermedium (1), das Grobfiltermedium (2) und das Feinstfiltermedium (3) aufteilt, dass das Feinstfiltermedium (3) in das Feinfiltermedium (1) eingearbeitet ist,
**dadurch gekennzeichnet, dass** als Feinfiltermedium ein Polyester-Nadelvlies eingesetzt wird, welches Partikel in einem Bereich von 5 µm bis 50 µm zurückhält, das Feinfiltermedium (1) ein Trägermaterial ist, in welchem das Grobfiltermedium (2) und das Feinstfiltermedium (3) eingebracht sind, wobei an Stellen, an denen das Grobfiltermedium (2) und das Feinstfiltermedium (3) vorgesehen sind, das Feinfiltermedium (1) ausgespart ist, so dass keine Hintereianderschaltung eines Feinfiltermediums (1) mit einem Grobfiltermedium (2) oder einem Feinstfiltermedium (3) vorliegt.

2. Fluidfilter nach Anspruch 1, **dadurch gekennzeichnet, dass** das Fluidfiltermedium (10) mit mindestens einem Ventil oder Steuerschieber versehen ist, mit welchem das Fluid durch das Grobfiltermedium (2) und/oder das Feinfiltermedium (1) und/oder das Feinstfiltermedium (3) steuerbar ist.

3. Fluidfilter nach einem der Ansprüche 1 bis 2, **dadurch gekennzeichnet,dass** das Fluidfiltermedium (10) ein zusätzliches Grobfiltermedium (4) aufweist, welches parallel zu dem Feinfiltermedium (1), dem ersten Grobfiltermedium (2) und dem Feinstfiltermedium (3) vom Fluid durchströmbar angeordnet ist, so dass sich ein Fluidstrom des Fluids durch das Feinfiltermedium (1), das erste Grobfiltermedium (2), das Feinstfiltermedium (3) und das zweite Grobfiltermedium (4) aufteilt.

4. Fluidfilternach einem der Ansprüche 1 bis 3, **dadurch gekennzeichnet, dass** das Feinstfiltermedium (3) Partikel mit einer Größe von kleiner 5 µm durchlässt.

5. Fluidfilter nach einem der Anspruch 1 bis 4,
**dadurch gekennzeichnet,dass** das Feinfiltermedium (1) Partikel mit einer Größe von kleiner 50 µm durchlässt.

6. Fluidfilter nach einem der Ansprüche 1 bis 5, **dadurch gekennzeichnet, dass** das Fluidfiltermedium (10) als einlagiges Fluidfiltermedium (10) ausgebildet ist.

## Claims

1. Fluid filter having a fluid filter medium (10) through which a fluid can flow, wherein the fluid filter medium (10) comprises:
- a fine filter medium (1),
- a first coarse filter medium (2) which is arranged parallel to the fine filter medium (1) such that fluid can flow through it, wherein the coarse filter medium (2) is incorporated into the fine filter medium (1) and, under normal and high operating temperatures of the fluid in the fluid filter, the coarse filter medium (2) is arranged in a region which is situated outside a main throughflow area of the fluid filter,
wherein the fluid filter medium (10) additionally comprises an ultrafine filter medium (3) which is arranged parallel to the fine filter medium (1) and to the coarse filter medium (2) such that fluid can flow through it, with the result that a fluid flow of the fluid is subdivided by the fine filter medium (1), the coarse filter medium (2) and the ultrafine filter medium (3), that the ultrafine filter medium (3) is incorporated into the fine filter medium (1), **characterized in that** the fine filter medium used is a polyester needle felt which retains particles in a range from 5 µm to 50 µm, and the fine filter medium (1) is a carrier material in which the coarse filter medium (2) and the ultrafine filter medium (3) are introduced, wherein the fine filter medium (1) is cut out at points at which the coarse filter medium (2) and the ultrafine filter medium (3) are provided, with the result that no series connection of a fine filter medium (1) with a coarse filter medium (2) or an ultrafine filter medium (3) is present.

2. Fluid filter according to Claim 1, **characterized in that** the fluid filter medium (10) is provided with at least one valve or control slide by means of which the fluid can be controlled through the coarse filter medium (2) and/or the fine filter medium (1) and/or the ultrafine filter medium (3).

3. Fluid filter according to either of Claims 1 and 2, **characterized in that** the fluid filter medium (10) comprises an additional coarse filter medium (4) which is arranged parallel to the fine filter medium (1), the first coarse filter medium (2) and the ultrafine filter medium (3) such that fluid can flow through it, with the result that a fluid flow of the fluid is subdivided by the fine filter medium (1), the first coarse filter medium (2), the ultrafine filter medium (3) and the second coarse filter medium (4).

4. Fluid filter according to one of Claims 1 to 3, **characterized in that** the ultrafine filter medium (3) allows through particles with a size of less than 5 µm.

5. Fluid filter according to one of Claims 1 to 4, **characterized in that** the fine filter medium (1) allows through particles with a size of less than 50 µm.

6. Fluid filter according to one of Claims 1 to 5, **characterized in that** the fluid filter medium (10) is designed as a single-layer fluid filter medium (10).

## Revendications

1. Filtre de fluide avec un agent de filtrage de fluide (10) pouvant être traversé par un fluide, l'agent de filtrage de fluide (10) comportant :
un agent de filtrage fin (1) ;
un premier agent de filtrage grossier (2) disposé de façon à pouvoir être traversé par le fluide parallèlement à l'agent de filtrage fin (1), l'agent de filtrage grossier (2) étant encastré dans l'agent de filtrage fin (1) et en cas de températures de fonctionnement normales et élevées du fluide dans le filtre de fluide, l'agent de filtrage grossier (2) étant disposé dans une région située à l'extérieur d'une zone d'écoulement principale du filtre de fluide ;
l'agent de filtrage de fluide (10) comportant en outre un agent de filtrage fin (3) disposé de façon à pouvoir être traversé par le fluide parallèlement à l'agent de filtrage fin (1) et à l'agent de filtrage grossier (2), de façon à redistribuer un courant fluide de fluide à travers l'agent de filtrage fin (1), l'agent de filtrage grossier (2) et l'agent de filtrage le plus fin (3), que l'agent de filtrage le plus fin (3) est encastré dans l'agent de filtrage fin (1) ;
**caractérisé en ce que** l'agent de filtrage fin utilisé est un non-tissé aiguilleté en polyester retenant les particules dans une plage de 5 µm à 50 µm ;
l'agent de filtrage fin (1) est un matériau de support dans lequel l'agent de filtrage grossier (2) et l'agent de filtrage le plus fin (3) sont amenés, en des points auxquels l'agent de filtrage grossier (2) et l'agent de filtrage le plus fin (3) sont prévus, l'agent de filtrage fin (1) étant évidé, de sorte qu'aucun montage successif d'agent de filtrage fin (1) n'est présent en cas d'agent de filtrage grossier (2) ou d'agent de filtrage le plus fin (3).

2. Filtre de fluide selon la revendication 1, **caractérisé en ce que** l'agent de filtrage de fluide (10) est pourvu d'au moins un poussoir de soupape ou de commande à l'aide duquel le fluide peut être commandé par l'agent de filtrage grossier (2) et/ou l'agent de filtrage fin (1) et/ou l'agent de filtrage le plus fin (3).

3. Filtre de fluide selon l'une quelconque des revendications 1 à 2, **caractérisé en ce que** l'agent de filtrage de fluide (10) comporte un agent de filtrage grossier (4) supplémentaire disposé de façon à pouvoir être traversé par le fluide parallèlement à l'agent de filtrage fin (1), au premier agent de filtrage grossier (2) et à l'agent de filtrage le plus fin (3), de façon à redistribuer un flux fluide de fluide à travers l'agent de filtrage fin (1), le premier agent de filtrage grossier (2), l'agent de filtrage le plus fin (3) et le deuxième agent de filtrage grossier (4).

4. Filtre de fluide selon l'une quelconque des revendications 1 à 3, **caractérisé en ce que** l'agent de filtrage le plus fin (3) laisse passer des particules de taille inférieure à 5 µm.

5. Filtre de fluide selon l'une quelconque des revendications 1 à 4, **caractérisé en ce que** l'agent de filtrage fin (1) laisse passer des particules de taille inférieure à 50 µm.

6. Filtre de fluide selon l'une quelconque des revendications 1 à 5, **caractérisé en ce que** l'agent de filtrage de fluide (10) est réalisé sous la forme d'un agent de filtrage de fluide (10) monocouche.
